# EUROPÄISCHE PATENTSCHRIFT

(11) **EP 4 048 987 B1**
(45) Veröffentlichungstag und Bekanntmachung des Hinweises auf die Patenterteilung: **16.08.2023**
(21) Anmeldenummer: 20835710.3
(22) Anmeldetag: 14.12.2020
(51) Int. Cl.: G01H 1/10, G01H 13/00

(54) **VERFAHREN ZUR VERMESSUNG DES SCHWINGUNGSVERHALTENS EINES ANTRIEBSSTRANGS EINES EINEN GENERATOR AUFWEISENDEN TURBOSATZES EINES MIT EINEM ENERGIENETZ VERBUNDENEN KRAFTWERKS**
METHOD FOR MEASURING THE VIBRATION BEHAVIOUR OF A DRIVETRAIN OF A TURBOSET COMPRISING A GENERATOR IN A POWER PLANT CONNECTED TO AN ENERGY SUPPLY NETWORK
PROCÉDÉ DE MESURE DU COMPORTEMENT VIBRATOIRE D'UNE TRANSMISSION D'UN TURBOGÉNÉRATEUR COMPRENANT UN GÉNÉRATEUR DANS UNE CENTRALE ÉLECTRIQUE RELIÉE À UN RÉSEAU D'ALIMENTATION EN ÉNERGIE

(30) Priorität: 17.12.2019 DE 102019219857
(43) Veröffentlichungstag der Anmeldung: 31.08.2022
(73) Patentinhaber: Siemens Energy Global GmbH & Co. KG, 81739 München (DE)
(72) Erfinder: DEGENHARDT, Achim, 91054 Erlangen (DE)
(86) Internationale Anmeldenummer: PCT/EP2020/086023
(87) Internationale Veröffentlichungsnummer: WO 2021/122476

(56) Entgegenhaltungen:
- EP-A1- 2 990 609
- DE-A1- 19 903 627
- US-A1- 2009 179 663

## Beschreibung

Die Erfindung betrifft ein Verfahren zur Vermessung des Schwingungsverhaltens eines Antriebsstrangs eines einen Generator aufweisenden Turbosatzes eines mit einem Energienetz verbundenen Kraftwerks.

Turbosätze von an ein Energienetz angeschlossenen Gas-, Dampf- oder GuD-Kraftwerken umfassen als Hauptkomponenten eine Welle, eine oder mehrere Turbinen als Kraftmaschine sowie einen Generator als Arbeitsmaschine. Wird der Generator mit einer plötzlich auftretenden sprunghaften Wirklaständerung konfrontiert, die beispielsweise durch Schaltvorgänge oder Kurzschlüsse hervorgerufen wird, kann es beim Ausgleichsvorgang zu sogenannten Polradpendelungen kommen, bei denen der Polradwinkel zu seinem neuen, durch den neuen Belastungszustand bedingten Wert hin verändert wird. Der neue Polradwinkel stellt sich jedoch nicht unmittelbar ein. Vielmehr pendelt er aufgrund der Trägheit des Rotors mit abnehmender Amplitude um seinen neuen Endwert. Die Pendelung erfolgt dabei mit der Eigenfrequenz des Antriebsstrangs, was sich negativ auf die Stabilität des Generators auswirken kann. Dem Generator ist daher normalerweise ein Pendeldämpfungsgerät zugeordnet, das einen Teil des Regelkreises des Generators bildet und häufig in der Regelsoftware des Generators integriert ist. Im sogenannten Inselbetrieb des Generators dient der Spannungsregler dazu, die Klemmenspannung bei verschiedenen Belastungen des Generators konstant zu halten. Im sogenannten Netzbetrieb des Generators wird er dazu eingesetzt, bei einer bestimmten Wirklast des Generators eine variable Blindleistung zu liefern. Es beeinflusst über den Erregerstrom die Klemmenspannung bzw. den Leistungsfaktor des Generators. In Abhängigkeit von der Betriebsart wird für den Regelkreis ein Spannungssollwert gebildet und dem Regler vorgegeben. Das Pendeldämpfungsgerät erzeugt in Abhängigkeit von der Bauart aus den Größen Generatordrehzahl und/oder Generatorleistung ein Zusatzsignal, das dem Spannungssollwert addiert wird. Es reagiert auf dynamische Änderungen seiner Eingangssignale, die einen Ausgleichsvorgang des Generators zu einem neuen Betriebspunkt bedeuten, und verändert den Spannungssollwert kurzzeitig. Über den Generatorspannungssollwert, den Spannungsregler, den unterlagerten Erregerstrom und die im Generator induzierte Spannung werden letztendlich der Verlauf der Wirkleistung des Generators während eines Ausgleichsvorgangs beeinflusst und Polradschwingungen gedämpft.

Um einen Generator optimal beeinflussen zu können, müssen Pendeldämpfungsgeräte für den jeweiligen Generator im Rahmen der Inbetriebnahme des Turbosatzes justiert werden. Hierzu wird bei der ersten Inbetriebnahme oder bei der Wiederinbetriebnahme nach einer Wartung das im Lastbetrieb vorhandene Generatormoment variiert. Die Variation kann am einfachsten über eine Beeinflussung des Feldstroms über die Feldspannung erfolgen. Die Feldspannung wird wiederum vom Spannungsregler über die Erregereinrichtung gestellt. Die Feldspannung wird dabei im manuellen Betrieb fest vorgegeben, im Reglerbetrieb als Klemmenspannungssollwert zur Regelung der Klemmenspannung verwendet. In beiden Fällen kann eine Variation über einen zeitlich variablen Offset zur auszugebenden Feldspannung erfolgen. Alternativ kann im Reglerbetrieb der Klemmenspannungssollwert variiert werden. In allen Fällen kann das Anregersignal im Spannungsregler erzeugt oder über eine externe Signalquelle eingespeist werden. Grundsätzlich sind unterschiedliche Anregersignale denkbar, wie beispielsweise Rauschsignale mit unterschiedlichen Frequenzspektren, Sweeps oder einzelne Anregersignale. Die Erfassung der angeregten Schwingungen kann dann effektiv und genau über die Messung der Wirkleistung erfolgen. Basierend auf den Anregersignalen und der gemessenen Wirkleistung wird dann im Rahmen einer Auswertung eine Übertragungsfunktion vom Anregungssignal zur Wirkleistung erstellt, die der späteren Regelung zugrunde gelegt wird. Die Anregung und Auswertung wird grundsätzlich auf die Frequenzbereiche von etwa 0,2Hz bis etwa 2,0Hz, maximal 3,0 Hz beschränkt, da für die Justage von Pendeldämpfungsgeräten ausschließlich die Wechselwirkung zwischen Kraftwerk und Energienetz von Interesse ist. Die oberste Grenze von 3,0 Hz wird von vielen Netzwerkbetreibern vorgegeben, um schädliche Auswirkungen auf das Energienetz zu verhindern. Darüber hinaus ist der Einfluss von Frequenzen, die größer als 3,0Hz sind, aber auch durch die Übertragungsfunktion des Anregersignalregelkreises und durch die Feldwicklung des Generators beschränkt, die dazu neigt, höhere Frequenzen beträchtlich zu dämpfen.

Für den sicheren Betrieb eines Kraftwerks ist ferner die Kenntnis des Verhaltens des Wellenstrangs bei Anregung durch Torsionsmomente im laufenden Betrieb erforderlich, insbesondere die genaue Lage der Eigenmoden. Die dominierenden, meist subsynchronen Torsionseigenfrequenzen des Wellenstrangs weisen häufig eine scharfe Charakteristik auf und unterliegen einer geringen natürlichen Dämpfung. Wird während des Kraftwerkbetriebs ein Ungleichgewicht zwischen dem Antriebsmoment des oder der Turbinen und dem Abtriebsmoment des Generators erzeugt, beispielsweise durch einen mechanischen Störfall oder durch Lastschwankungen im Netz, so führt dies automatisch zu Ausgleichsvorgängen, die im Generatorspalt ein elektrisches Generatorgegenmoment erzeugen, dessen Frequenz meist unterhalb der Nennfrequenz des Generators liegt. Befindet sich die Frequenz des Generatorgegenmoments nahe einer subsynchronen Torsionseigenfrequenz des Wellenstrangs, kann der Wellenstrang zu starken Resonanzschwingungen angeregt werden. Durch diese Resonanzschwingungen werden wiederum im Stator des Generators subfrequente Ströme induziert, die zurück ins Netz geleitet werden. Bei geringer oder gar negativen Dämpfung des elektrischen und mechanischen Gesamtsystems können die Torsionsschwingungen des Wellenstrangs weiter angeregt werden, was zu unzulässig hohen Belastungen des Wellenstrangs führt, die wiederum eine Verringerung der Lebensdauer oder gar einen Ausfall des Turbosatzes nach sich ziehen können. Entsprechend müssen die Torsionseigenmoden ermittelt werden, um diese während des Kraftwerkbetriebs meiden zu können. Versuche einer Messung der Torsionseigenmoden am rotierenden Wellenstrang durch Einspeisung von Momenten an der Haupterregermaschine waren bislang nicht erfolgreich, da die eingespeisten Momente zu gering ausfielen. Entsprechend erfolgt die Ermittlung der Torsionseigenmoden derzeit rechnerisch auf Basis von Modellen.

EP 2 990 609 offenbart ein Verfahren zur Vermessung des Schwingungsverhaltens eines Antriebsstrangs eines einen Generator aufweisenden Turbosatzes eines mit einem Energienetz verbundenen Kraftwerks.

Ausgehend von diesem Stand der Technik ist es eine Aufgabe der vorliegenden Erfindung, ein alternatives Verfahren zur Vermessung des Schwingungsverhaltens eines Antriebsstrangs eines einen Generator aufweisenden Turbosatzes eines mit einem Energienetz verbundenen Kraftwerks zu schaffen.

Zur Lösung dieser Aufgabe schafft die vorliegende Erfindung ein Verfahren zur Vermessung des Schwingungsverhaltens eines Antriebsstrangs eines einen Generator aufweisenden Turbosatzes eines mit einem Energienetz verbundenen Kraftwerks, wobei das Verfahren die Schritte aufweist: a) Auswahl von Anregersignalen, insbesondere in Form von Spannungssignalen, wobei das Frequenzspektrum Frequenzen bis zumindest 15Hz, bevorzugt bis zumindest 97Hz, besser noch bis zumindest 147Hz enthält und damit deutlich über denjenigen Frequenzbereich hinausgeht, der für die Inbetriebnahme von Pendeldämpfungsgeräten üblich ist (normalerweise etwa 0,2Hz bis etwa 3,0Hz), b) Beeinflussen des Feldstroms des Generators unter Verwendung der in Schritt a) ausgewählten Anregersignale derart, dass mechanische Schwingungen im Kraftwerkturbosatz angeregt werden, c) Erfassen der angeregten mechanischen Schwingungen einschließlich der Resonanzschwingungen durch Messen zumindest einer geeigneten Ausgangsgröße, insbesondere der Wirkleistung, d) rechnerisches Ermitteln einer Übertragungsfunktion vom Anregersignal zur in Schritt c) gemessenen Ausgangsgröße und e) rechnerisches Ermitteln der Übertragungsfunktion vom Generatormoment zu einer gewünschten Ausgangsgröße unter Verwendung bekannter Übertragungsfunktionen vom in Schritt b) verwendeten Anregersignal zu einer gewünschten Eingangsgröße und/oder von der gewünschten Ausgangsgröße zu der in Schritt c) gemessenen Ausgangsgröße basierend auf der in Schritt d) ermittelten Übertragungsfunktion.

Die Durchführung der Schritte a) bis c) sowie die Ermittlung der Übertragungsfunktion vom Anregersignal (Spannungssignal) zu der zumindest einen Ausgangsgröße (gemessene Wirkleistung) in Schritt d) ist, wie es eingangs bereits beschrieben wurde, zur Einrichtung eines Pendeldämpfungsgeräts grundsätzlich bekannt, nur dass der Frequenzbereich der Anregersignale bislang auf Frequenzen bis maximal etwa 3,0Hz begrenzt war. Beim erfindungsgemäßen Verfahren umfasst der Frequenzbereich viel höhere Frequenzen von bis zumindest 15Hz, bevorzugt bis zumindest 97Hz, besser noch bis zumindest 147Hz, und ermöglicht damit in Schritt c) die Erfassung der Torsionseigenmoden. In Schritt e) wird dann eine weitere Übertragungsfunktion vom Generatormoment zu einer gewünschten Ausgangsgröße berechnet, wie beispielsweise zur Wirkleistung. Mit dieser weiteren Übertragungsfunktion kann das Verhalten des Kraftwerks über den gesamten Frequenzbereich der gewählten Anregersignale sowie die Wechselwirkung zwischen Kraftwerk und Pendeldämpfungsgerät beschrieben werden. Die erfassten Torsionsmoden können zur Bestätigung/Überprüfung von Simulationsmodellen herangezogen werden. Zudem können sie in die Regelung des Generators eingebunden werden, womit die Zuverlässigkeit des Kraftwerks deutlich erhöht wird.

Bevorzugt handelt es sich bei den Anregersignalen um Signale mit unterschiedlichen Frequenzanteilen mit unterschiedlichen Amplituden, wobei eine Auswahl der Amplituden unter Berücksichtigung vorab bekannter Amplituden-Grenzwerte der in Schritt c) gemessenen Ausgangsgröße vorgenommen wird.

Vorteilhaft handelt es sich bei der gemessenen Ausgangsgröße um die Wirkleistung. Die hierfür erforderlichen Geräte sind bei bestehenden Kraftwerken bereits vorhanden, so dass zur Messung der Ausgangsgröße keine zusätzlichen Geräte zur Durchführung des erfindungsgemäßen Verfahrens erforderlich sind.

Bevorzugt handelt es sich bei den vorab bekannten Amplituden-Grenzwerten um Grenzwerte, die durch ein Erregersystem und/oder von einem Netzbetreiber vorgegeben sind und/oder die vorab basierend auf einer Simulation des Kraftwerkturbosatzes und/oder des mechanischen Strangs ermittelt wurden.

Vorteilhaft werden die Amplituden der Anregersignale unter Berücksichtigung der Verstärkung durch die nachfolgende Strecke frequenzabhängig an die Möglichkeiten der Erregereinrichtung, des Generators und/oder des Wellenstrangs und/oder an die Erfordernisse des restlichen Kraftwerks und/oder an die Anforderungen des Energienetzes angepasst. Entsprechend werden bei der Durchführung des Verfahrens negative Auswirkungen auf das Kraftwerk und/oder auf das Energienetz vermieden.

Gemäß einer Ausgestaltung des erfindungsgemäßen Verfahrens weist das Frequenzspektrum der Anregersignale keine Frequenzen auf, die im Bereich der Resonanzfrequenzen des Netzes und/oder im Bereich sonstiger kritischer Frequenzen des Netzes liegen. Auch auf diese Weise werden gefährliche Anregungen während der Durchführung des Verfahrens verhindert.

Bevorzugt werden die Anregersignale in einem oder mehreren Rauschsignalen zusammengefasst, wodurch die zur Durchführung des Verfahrens erforderliche Zeitdauer verringert wird.

Gemäß einer Variante des erfindungsgemäßen Verfahrens wird der Generator-Feldstrom in Schritt b) bei statischer Erregung über die Generator-Feldspannung, bei bürstenloser Erregung über die Erregerspannung beeinflusst, die wiederum mittelbar über einen Spannungsregler beeinflusst wird, wobei die in Form von Spannungssignalen bereitgestellten Anregersignale in dem Spannungsregler als Klemmenspannungs-Sollwerte verwendet werden.

Alternativ wird der Feldstrom in Schritt b) bei statischer Erregung über die Generator-Feldspannung, bei bürstenloser Erregung über die Erregerspannung beeinflusst, die wiederum unmittelbar beeinflusst wird, indem die als Spannungssignale bereitgestellten Anregersignale additiv auf den Ausgang eines Spannungsreglers aufgeschaltet werden bzw. das Spannungsreglerausgangssignal ersetzen.

Bevorzugt handelt es sich in Schritt e) bei der gewünschten Ausgangsgröße um die Drehzahl des Generators und/oder um auftretende Momente an einer oder mehreren Stellen im Wellenstrang.

Weitere Merkmale und Vorteile der vorliegenden Erfindung werden anhand der nachfolgenden Beschreibung einer Ausführungsform des erfindungsgemäßen Verfahrens unter Bezugnahme auf die beiliegende Zeichnung deutlich. Darin ist
- Figur 1: ein Ablaufdiagramm, das schematisch die Schritte eines Verfahrens gemäß einer Ausführungsform der vorliegenden Erfindung zeigt;
- Figur 2: ein Graph, der beispielhaft die Auswahl eines gewünschten Wirkleistungsamplitudenspektrums zeigt;
- Figur 3: eine vergrößerte Ansicht des in Figur 2 gezeigten Graphs im Frequenzbereich von 0,1Hz bis etwa 15Hz;
- Figur 4: ein Graph, der das Anregersignalamplitudenspektrum zeigt, das zur Erzielung des in Figur 2 dargestellten gewünschten Wirkleistungsamplitudenspektrums erforderlich ist; und
- Figur 5: eine vergrößerte Ansicht des in Figur 4 gezeigten Graphs im Frequenzbereich vom 0Hz bis 50Hz.

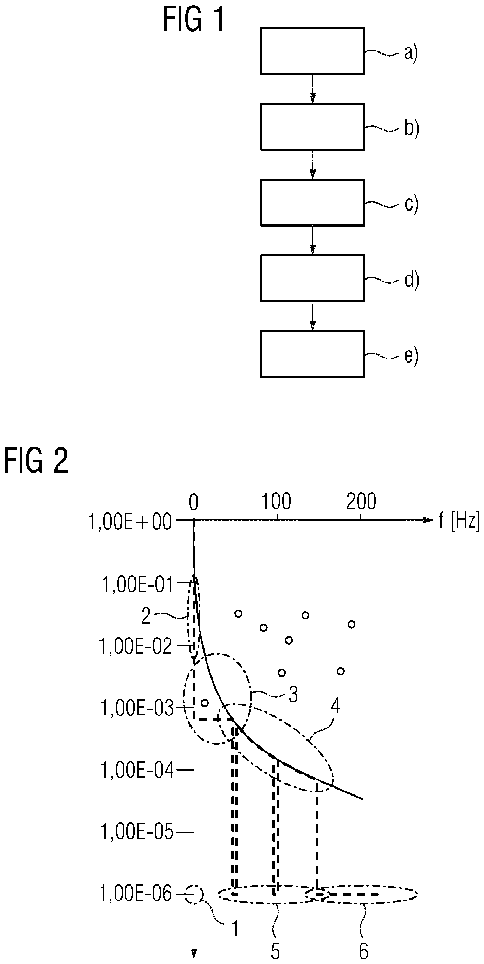

Figur 1 zeigt ein Ablaufdiagramm eines erfindungsgemäßen Verfahrens zur Inbetriebnahme eines einen Generator aufweisenden Turbosatzes eines mit einem Energienetz verbundenen Kraftwerks. In einem ersten Schritt a) werden Anregersignale ausgewählt, vorliegend in Form von Spannungssignalen, wobei das Frequenzspektrum zur Erfassung der Torsionseigenmoden Frequenzen im Bereich von beispielsweise 0,2Hz bis beispielsweise 147Hz umfasst und damit deutlich über den aus der Inbetriebnahme von Pendeldämpfungsgeräten üblichen Frequenzbereich hinausgeht. Eine besondere Herausforderung dabei ist die Anpassung des Amplitudenspektrums für unterschiedliche Frequenzen. Hierfür wurde ein Konzept erarbeitet, dass nachfolgend unter Bezugnahme auf die Figuren 2 bis 5 am Beispiel eines bestehenden Kraftwerks beschrieben wird.

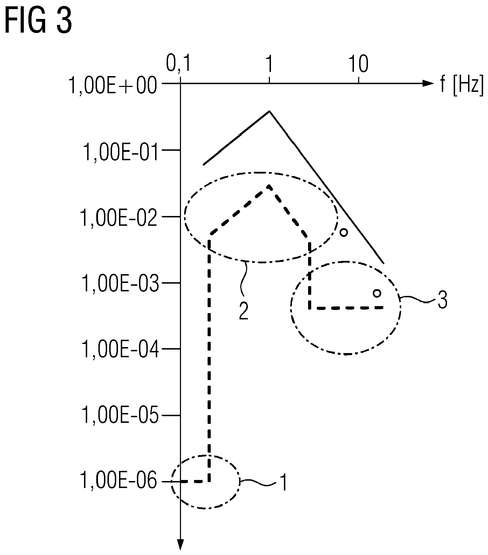

Die Figuren 2 und 3 zeigen das Amplitudenspektrum der Wirkleistung, wobei auf der X-Achse die Frequenzen und auf der Y-Achse die Amplituden aufgetragen ist. Die durchgezogene Linie repräsentiert durch das Erregersystem vorgegebene Amplituden-Grenzwerte, die gestrichelte Linie repräsentiert durch elektrische Anforderungen des Kraftwerks und des Energienetzes vorgegebene Amplituden-Grenzwerte, und die hohlen Punkte repräsentieren mechanische Amplituden-Grenzwerte des Wellenstrangs aufgrund von Torsionsmoden. Diese Amplituden-Grenzwerte sind bekannt.

An die Auswahl der Anregersignale wurden beispielhaft entsprechend den Anforderungen einer einzelnen Anlage folgende Anforderungen gestellt:
1) Keine Anregersignale unter 0,2Hz.
2) 1% Anregersignal im Frequenzbereich von 0,2Hz bis 3,0Hz.
3) Maximal 0,041% Schwingungsamplitude der Wirkleistungsschwingungen bei allen Frequenzen oberhalb von 3,0Hz.
4) Maximal 14% Anregersignal bei allen Frequenzen oberhalb von 3,0Hz.
5) Keine Anregersignale bei ganzzahligen Vielfachen von 50Hz ± 2,5Hz.
6) Kein Anregersignal oberhalb von 150Hz.

Die Punkt-Strich-Linie in den Figuren 2 und 3 repräsentiert das sich gemäß diesen sechs Anforderungen ergebende Amplitudenspektrum der Wirkleistung, wobei die einzelnen Anforderungen im Graph durch entsprechende Ziffern markiert sind.

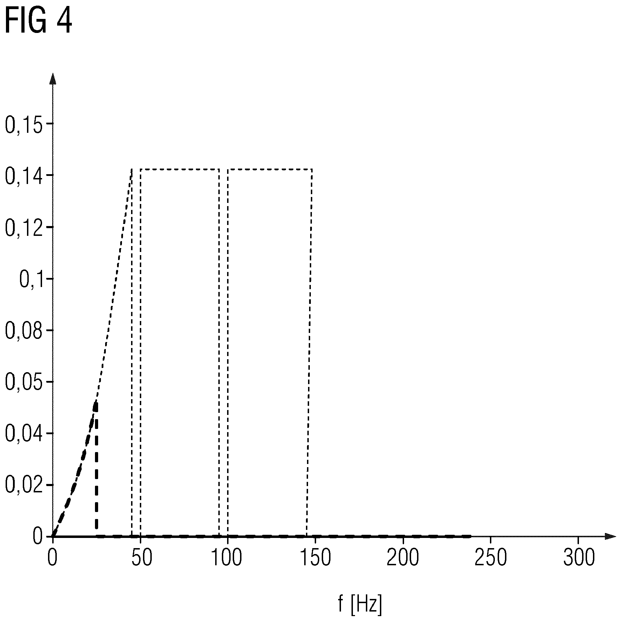

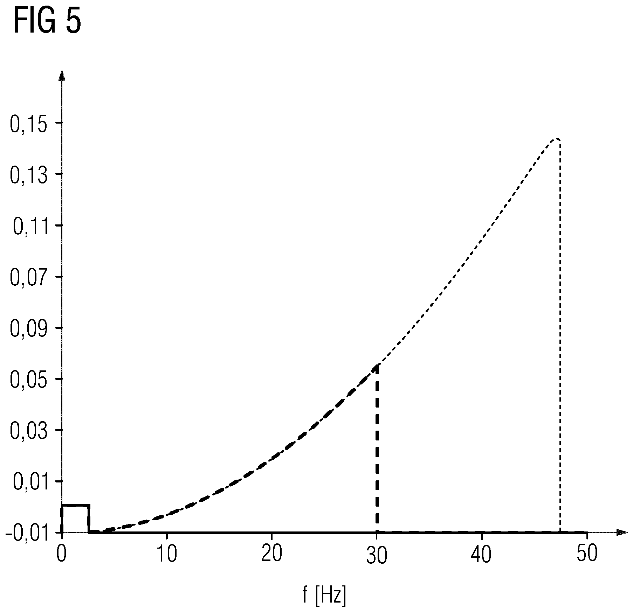

Die Figuren 4 und 5 zeigen das Amplitudenspektrum des Anregersignals, das rein rechnerisch zur Erzielung des in den Figuren 2 und 3 dargestellten Amplitudenspektrums der Wirkleistung erforderlich ist, wobei auf der X-Achse die Anregersignale und auf der Y-Achse die angeregten Amplituden aufgetragen sind. Die drei Spektren bis 3Hz (durchgezogene Linie), bis 30Hz (gestrichelte Linie) und bis 147Hz (dünn gestrichelte Linie) ermöglichen es, den Frequenzbereich schrittweise zu erhöhen. Der erste Schritt bis 3Hz entspricht dabei einer Übertragungsfunktionsmessung, wie sie von der Pendeldämpfungsgerät-Inbetriebnahme bekannt ist.

In Schritt b) wird der Feldstrom des Generators unter Verwendung der in Schritt a) ausgewählten Anregersignale derart beeinflusst, dass mechanische Schwingungen im Kraftwerkturbosatz angeregt werden. Die Anregersignale werden dabei in einem oder mehreren Rauschsignalen zusammengefasst. Der Generator-Feldstrom kann gemäß einer ersten Variante über die Generator-Feldspannung oder die Erregerspannung beeinflusst werden, die wiederum mittelbar über einen Spannungsregler beeinflusst wird, wobei die in Form von Spannungssignalen bereitgestellten Anregersignale in dem Spannungsregler als Klemmenspannungs-Sollwerte verwendet werden. Alternativ kann der Feldstrom gemäß einer zweiten Variante über die Generator-Feldspannung oder die Erregerspannung beeinflusst werden, die wiederum unmittelbar beeinflusst wird, indem die als Spannungssignale bereitgestellten Anregersignale additiv auf den Ausgang eines Spannungsreglers aufgeschaltet werden bzw. das Spannungsreglerausgangssignal ersetzen.

Anschließend werden in Schritt c) die angeregten mechanischen Schwingungen einschließlich der Resonanzschwingungen durch Messen zumindest einer geeigneten Ausgangsgröße erfasst, bei der es sich vorliegend um die Wirkleistung handelt.

In einem weiteren Schritt d) wird eine Übertragungsfunktion vom Anregersignal zur in Schritt c) gemessenen Wirkleistung in bekannter Weise rechnerisch ermittelt.

Im letzten Schritt e) erfolgt ein rechnerisches Ermitteln einer Übertragungsfunktion vom Generatormoment zu einer gewünschten Ausgangsgröße, bei der es sich vorliegend ebenfalls um die Wirkleistung handelt. Alternativ kann es sich bei der gewünschten Ausgangsgröße aber auch um die Drehzahl des Generators oder um auftretende Momente an einer oder mehreren Stellen im Wellenstrang handeln. Die Berechnung dieser Übertragungsfunktion erfolgt unter Verwendung bekannter Übertragungsfunktionen vom in Schritt b) verwendeten Anregersignal zu einer gewünschten Eingangsgröße und/oder von der gewünschten Ausgangsgröße zu der in Schritt c) gemessenen Ausgangsgröße basierend auf der in Schritt d) ermittelten Übertragungsfunktion. Es sollte klar sein, dass in Schritt e) auch mehrere Übertragungsfunktionen ermittelt werden können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, der durch die Ansprüche definiert ist, zu verlassen.

## Patentansprüche

1. Verfahren zur Vermessung des Schwingungsverhaltens eines Antriebsstrangs eines einen Generator aufweisenden Turbosatzes eines mit einem Energienetz verbundenen Kraftwerks, wobei das Verfahren die Schritte aufweist:
a) Auswahl von Anregersignalen, insbesondere in Form von Spannungssignalen, wobei das Frequenzspektrum der ausgewählten Anregersignale Frequenzen bis zumindest 15Hz enthält, bevorzugt bis zumindest 97Hz, besser noch bis zumindest 147Hz,
b) Beeinflussen des Feldstroms des Generators unter Verwendung der in Schritt a) ausgewählten Anregersignale derart, dass mechanische Schwingungen im Kraftwerkturbosatz angeregt werden,
c) Erfassen der angeregten mechanischen Schwingungen einschließlich der Resonanzschwingungen durch Messen zumindest einer geeigneten Ausgangsgröße,
d) Rechnerisches Ermitteln einer Übertragungsfunktion vom Anregersignal zur in Schritt c) gemessenen Ausgangsgröße
**dadurch gekennzeichnet, dass** das Verfahren folgenden Schritt aufweist:
e) rechnerisches Ermitteln der Übertragungsfunktion vom Generatormoment zu einer gewünschten Ausgangsgröße unter Verwendung bekannter Übertragungsfunktionen vom in Schritt b) verwendeten Anregersignal zu einer gewünschten Eingangsgrö-ße und/oder von der gewünschten Ausgangsgröße zu der in Schritt c) gemessenen Ausgangsgröße basierend auf der in Schritt d) ermittelten Übertragungsfunktion.

2. Verfahren nach Anspruch 1,
**dadurch gekennzeichnet, dass**
es sich bei den Anregersignalen um Signale mit unterschiedlichen Frequenzanteilen mit unterschiedlichen Amplituden handelt, und
dass eine Auswahl der Amplituden unter Berücksichtigung vorab bekannter Amplituden-Grenzwerte der in Schritt c) gemessenen Ausgangsgröße vorgenommen wird.

3. Verfahren nach Anspruch 2,
**dadurch gekennzeichnet, dass**
es sich bei der gemessenen Ausgangsgröße um die Wirkleistung handelt.

4. Verfahren nach Anspruch 2 oder 3,
**dadurch gekennzeichnet, dass**
es sich bei den vorab bekannten Amplituden-Grenzwerten um Grenzwerte handelt, die durch ein Erregersystem und/oder von einem Netzbetreiber vorgegeben sind und/oder die vorab basierend auf einer Simulation des Kraftwerkturbosatzes und/oder des mechanischen Strangs ermittelt wurden.

5. Verfahren nach einem der Ansprüche 2 bis 4,
**dadurch gekennzeichnet, dass**
die Amplituden der Anregersignale unter Berücksichtigung der Verstärkung durch die nachfolgende Strecke frequenzabhängig an die Möglichkeiten der Erregereinrichtung, des Generators und/oder des Wellenstrangs und/oder an die Erfordernisse des restlichen Kraftwerks und/oder an die Anforderungen des Energienetzes angepasst werden.

6. Verfahren nach einem der vorhergehenden Ansprüche,
**dadurch gekennzeichnet, dass**
das Frequenzspektrum der Anregersignale keine Frequenzen aufweist, die im Bereich der Resonanzfrequenzen und/oder im Bereich sonstiger kritischer Frequenzen des Netzes liegen.

7. Verfahren nach einem der vorhergehenden Ansprüche,
**dadurch gekennzeichnet, dass**
die Anregersignale in einem oder mehreren Rauschsignalen zusammengefasst werden.

8. Verfahren nach einem der vorhergehenden Ansprüche,
**dadurch gekennzeichnet, dass**
der Feldstrom in Schritt b) bei statischer Erregung über die Generator-Feldspannung, bei bürstenloser Erregung über die Erregerspannung beeinflusst wird, die wiederum mittelbar über einen Spannungsregler beeinflusst wird,
wobei die in Form von Spannungssignalen bereitgestellten Anregersignale in dem Spannungsregler als Klemmenspannungs-Sollwerte verwendet werden.

9. Verfahren nach einem der Ansprüche 1 bis 7,
**dadurch gekennzeichnet, dass**
der Feldstrom in Schritt b) bei statischer Erregung über die Generator-Feldspannung, bei bürstenloser Erregung über die Erregerspannung beeinflusst wird, die wiederum unmittelbar beeinflusst wird, indem die als Spannungssignale bereitgestellten Anregersignale additiv auf den Ausgang eines Spannungsreglers aufgeschaltet werden bzw. das Spannungsreglerausgangssignal ersetzen.

10. Verfahren nach einem der vorhergehenden Ansprüche,
**dadurch gekennzeichnet, dass**
in Schritt c) als geeignete Ausgangsgröße die Wirkleistung des Generators gemessen wird.

11. Verfahren nach einem der vorhergehenden Ansprüche,
**dadurch gekennzeichnet, dass**
er sich in Schritt e) bei der gewünschten Ausgangsgröße um die Drehzahl des Generators und/oder um auftretende Momente an einer oder mehreren Stellen im Wellenstrang handelt.

## Claims

1. Method for measuring the vibration behavior of a drivetrain of a turboset comprising a generator in a power plant connected to an energy network, wherein the method has the steps of:
a) selecting excitation signals, in particular in the form of voltage signals, wherein the frequency spectrum of the selected excitation signals contains frequencies of up to at least 15 Hz, preferably up to at least 97 Hz, better still up to at least 147 Hz,
b) influencing the field current of the generator using the excitation signals selected in step a) in such a manner that mechanical vibrations are excited in the power plant turboset,
c) capturing the excited mechanical vibrations, including the resonant vibrations, by measuring at least one suitable output variable,
d) computationally determining a transfer function from the excitation signal to the output variable measured in step c),
**characterized in that** the method has the following step of:
e) computationally determining the transfer function from the generator torque to a desired output variable using known transfer functions from the excitation signal used in step b) to a desired input variable and/or from the desired output variable to the output variable measured in step c) on the basis of the transfer function determined in step d) .

2. Method according to Claim 1,
**characterized in that**
the excitation signals are signals with different frequency components having different amplitudes, and
**in that** the amplitudes are selected taking into account previously known amplitude limit values of the output variable measured in step c).

3. Method according to Claim 2,
**characterized in that**
the measured output variable is the active power.

4. Method according to Claim 2 or 3,
**characterized in that**
the previously known amplitude limit values are limit values which are predefined by an excitation system and/or by a network operator and/or which were previously determined on the basis of a simulation of the power plant turboset and/or the mechanical train.

5. Method according to one of Claims 2 to 4,
**characterized in that**
the amplitudes of the excitation signals are adapted in a frequency-dependent manner to the possibilities of the excitation device, the generator and/or the shaft train and/or to the requirements of the remaining power plant and/or to the requirements of the energy network, taking into account the amplification produced by the subsequent section.

6. Method according to one of the preceding claims,
**characterized in that**
the frequency spectrum of the excitation signals does not have any frequencies which are in the range of the resonant frequencies and/or in the range of other critical frequencies of the network.

7. Method according to one of the preceding claims,
**characterized in that**
the excitation signals are combined in one or more noise signals.

8. Method according to one of the preceding claims,
**characterized in that**
the field current is influenced in step b) via the generator field voltage in the case of static excitation and via the excitation voltage in the case of brushless excitation, which is in turn indirectly influenced via a voltage controller,
wherein the excitation signals provided in the form of voltage signals are used as target terminal voltage values in the voltage controller.

9. Method according to one of Claims 1 to 7,
**characterized in that**
the field current is influenced in step b) via the generator field voltage in the case of static excitation and via the excitation voltage in the case of brushless excitation, which is in turn directly influenced by additively applying the excitation signals provided as voltage signals to the output of a voltage controller or replacing the voltage controller output signal with said excitation signals.

10. Method according to one of the preceding claims,
**characterized in that**
the active power of the generator is measured as a suitable output variable in step c).

11. Method according to one of the preceding claims,
**characterized in that**
the desired output variable in step e) is the speed of the generator and/or torques which occur at one or more points in the shaft train.

## Revendications

1. Procédé de mesure du comportement vibratoire d'une chaîne cinématique d'un turbogénérateur, comportant un générateur d'une centrale reliée à un réseau d'énergie, procédé dans lequel :
a) on sélectionne des signaux d'excitation, en particulier sous la forme de signaux de tension, dans lequel le spectre de fréquences des signaux d'excitation sélectionné contient des fréquences jusqu'à au moins 15 Hz, de préférence jusqu'à au moins 97 Hz, mieux encore jusqu'à au moins 147 Hz,
b) on influe sur le courant inducteur du générateur en utilisant les signaux d'excitation sélectionnés dans le stade a), de manière à exciter des vibrations mécaniques dans le turbogénérateur de la centrale,
c) on détecte les vibrations mécaniques excitées, y compris les vibrations de résonnance, en mesurant au moins une grandeur de sortie appropriée,
d) on détermine, par le calcul, une fonction de transfert du signal d'excitation à la grandeur de sortie mesurée dans le stade c),
**caractérisé en ce que** le procédé a le stade suivant :
e) on détermine, par le calcul, la fonction de transfert du couple du générateur à une grandeur de sortie souhaitée, en utilisant des fonctions de transfert connues du signal d'excitation utilisé dans le stade b) à une grandeur d'entrée souhaitée et/ou de la grandeur de sortie souhaitée à la grandeur de sortie mesurée dans le stade c), sur la base de la fonction de transfert déterminée dans le stade d) .

2. Procédé suivant la revendication 1,
**caractérisé en ce que**
les signaux d'excitation sont des signaux ayant des composantes de fréquence différentes d'amplitudes différentes, et
**en ce que** l'on effectue une sélection des amplitudes en tenant compte de valeurs limites d'amplitudes connues auparavant de la grandeur de sortie mesurée dans le stade c) .

3. Procédé suivant la revendication 2,
**caractérisé en ce que**
la grandeur de sortie mesurée est la puissance active.

4. Procédé suivant la revendication 2 ou 3,
**caractérisé en ce que**
les valeurs limites d'amplitudes connues auparavant sont des valeurs limites, qui sont prescrites par un système d'excitation et/ou par un exploitant du réseau et/ou qui ont été déterminées à l'avance sur la base d'une simulation du turbogénérateur de la centrale et/ou de la chaîne mécanique.

5. Procédé suivant l'une des revendications 2 à 4,
**caractérisé en ce que**
l'on adapte les amplitudes des signaux d'excitation en tenant compte de l'amplification par la section suivante, en fonction de la fréquence aux possibilités du dispositif d'excitation, du générateur et/ou de la chaîne d'arbres et/ou aux nécessités du reste de la centrale et/ou aux exigences du réseau d'énergie.

6. Procédé suivant l'une des revendications précédentes,
**caractérisé en ce que**
le spectre de fréquences des signaux d'excitation n'a pas de fréquence qui se trouve dans le domaine des fréquences de résonnance et/ou dans le domaine d'autres fréquences critiques du réseau.

7. Procédé suivant l'une des revendications précédentes,
**caractérisé en ce que**
l'on rassemble les signaux d'excitation en un ou en plusieurs signaux de bruit.

8. Procédé suivant l'une des revendications précédentes,
**caractérisé en ce que**
l'on influe sur le courant inducteur dans le stade b), s'il y a excitation statique par la tension d'inducteur du générateur, s'il y a excitation sans balai par la tension d'excitation, que l'on influe à son tour indirectement par un régleur de tension,
dans lequel on utilise les signaux d'excitation mis à disposition sous la forme de signaux de tension dans le régleur de tension, comme valeurs de consigne de la tension aux bornes.

9. Procédé suivant l'une des revendications 1 à 7,
**caractérisé en ce que**
l'on influe sur le courant inducteur dans le stade b), s'il y a excitation statique par la tension d'inducteur du générateur, s'il y a excitation sans balai par la tension d'excitation, que l'on influe à son tour directement, en appliquant les signaux d'excitation mis à disposition sous la forme de signaux de tension, additivement à la sortie d'un régleur de tension ou en remplaçant le signal de sortie du régleur de tension.

10. Procédé suivant l'une des revendications précédentes,
**caractérisé en ce que**
dans le stade c), on mesure la puissance active du générateur comme grandeur de sortie appropriée.

11. Procédé suivant l'une des revendications précédentes,
**caractérisé en ce que**
dans le stade e), la grandeur de sortie souhaitée est la vitesse de rotation du générateur et/ou des couples se produisant en un ou en plusieurs endroits dans la chaîne d'arbres.
